# EUROPEAN PATENT APPLICATION

(11) **EP 4 759 449 A1**
(43) Date of publication of application: **17.06.2026**
(21) Application number: 25222313.6
(22) Date of filing: 10.12.2025
(51) Int. Cl.: B08B 15/00, B08B 15/04, B23K 9/32, B25J 11/00

(54) **SYSTEMS AND METHODS FOR CONTROLLING MOVEMENT OF FUME MITIGATION VENT HOODS AND INLETS**

(30) Priority: 16.12.2024 US 202463734209 P; 20.11.2025 US 202519395456
(71) Applicant: Illinois Tool Works Inc., Glenview IL 60025 (US)
(72) Inventor: MARHEFKE, Jessica Marie, Glenview, 60025 (US); BECKER, William J., Glenview, 60025 (US); KOPAC III, Jordan, Glenview, 60025 (US); BEATHAM, Benjamin, Glenview, 60025 (US)
(74) Representative: HGF

(57) **Abstract**

A fume extraction system is designed for metal working and other applications. The fume extraction system includes one or more motors and/or adjustment devices to control fume suction airflow. One or more sensors may monitor a condition of the welding torch to determine if a welding arc is present. Control circuitry is operable to receive signals from the one or more sensors and/or power supply in order to determine the presence of the welding arc. The control circuitry can control the fume extraction system to adjust suction airflow based on the presence of the welding arc.

## Description

### RELATED APPLICATIONS

The present application claims the benefit of U.S. Provisional Patent Application Serial No. 63/734,209, filed December 16, 2024, entitled "SYSTEMS AND METHODS FOR CONTROLLING MOVEMENT OF FUME MITIGATION VENT HOODS AND INLETS." The entirety of U.S. Patent Application Serial No. 63/734,209 is expressly incorporated herein by reference.

### FIELD OF THE DISCLOSURE

This disclosure relates generally to welding fume extraction and, more particularly, to systems and methods for controlling movement of fume mitigation vent hoods and inlets.

### BACKGROUND

A wide range of industrial, commercial, hobby and other applications result in airborne components that can be removed with proper extraction and filtering. Metal working operations, for example, range from cutting, welding, soldering, assembly, and other processes that may generate smoke and fumes. In smaller shops it may be convenient simply to open ambient air passages or to use suction or discharge air from fans to maintain air spaces relatively clear. In other applications, enclosed and/or cart-type fume extraction systems are used. In industrial settings, more complex fixed systems may be employed for extracting fumes from specific works cells, metal working locations, and so forth. In other settings, such as machine shops, woodworking shops, worksites where cutting, sanding and other operations are performed, dust, fumes, particulate and other types of airborne components may be generated that it may be desirable to collect and extract from work areas and controlled spaces.

A number of systems have been developed for fume extraction, and a variety of these are currently in use. In general, these use suction air to draw fumes and smoke from the immediate vicinity of the metal working operation, and to filter the fumes and smoke before returning the air to the room or blowing the air to an outside space.

Further improvements are needed, however, in fume extraction systems. For example, it would be useful to be able to control suction to focus on location of fume generation, thereby improving fume extraction and air quality in the work environment.

### SUMMARY

The present disclosure provides improvements to conventional fume extraction designs. Example fume extraction systems can automatically control fume extraction inlets to move at one or more locations in a work area, in response to data corresponding to fume generation. These and other features and advantages of the present invention will be apparent from the following detailed description, in conjunction with the appended claims and corresponding figures.

### BRIEF DESCRIPTION OF THE DRAWINGS

The benefits and advantages of the present invention will become more readily apparent to those of ordinary skill in the relevant art after reviewing the following detailed description and accompanying drawings.
FIG. 1 illustrates an example fume extractor systems, in accordance with aspects of this disclosure.
FIG. 2 illustrates an example fume extractor systems including one or more movable arms, in accordance with aspects of this disclosure.
FIG. 3 illustrates an example fume extractor systems including one or more movable arms extending from a common valve, in accordance with aspects of this disclosure.
FIGS. 4A to 4C illustrate an example valve for a fume extractor system, in accordance with aspects of this disclosure.
FIGS. 5A and 5B illustrate an example fume extractor system operating a movable fume inlet, in accordance with aspects of this disclosure.

The figures are not necessarily to scale. Where appropriate, similar or identical reference numbers are used to refer to similar or identical components.

### DETAILED DESCRIPTION

Disclosed are systems and methods for fume extraction control. In particular, a fume extraction system, such as for a welding operation, includes one or more moveable components, such as articulating arms, fume inlets, and/or valves to control fume suction airflow.

A significant problem operators experience when using fume extraction devices is the range of the functional area for the fume extractor through the expanse of a working area. Conventional fume extraction systems operate at a distance from the work environment, and have to be activated prior to the welding operation and deactivated following the welding operation. Thus, the fume extraction system often operates continuously during welding, at a single point within the work environment, with a single, unchanging amount of suction (e.g., the suction or airflow motor is on the entire duration of welding, at a constant speed).

During a welding operation, for instance, the fume extractor and/or welded component needs to be repeatedly moved (e.g., reoriented, relocated, etc.) to ensure efficient and successful fume extraction. Despite some technological advances, many instances remain where the operator must manually adjust the workspace and/or tools to fully enjoy the benefits of fume extraction (e.g., removal of fumes, debris, etc., from the work environment). Furthermore, some existing fume extraction systems are not optimized for confined spaces.

Disclosed systems and methods integrate an automatically adjustable fume extraction source (e.g., mechanical arm/conduit/hood/inlet movement, extraction source inlet adjustment, selective extraction source activation, etc.), which can be controlled by one or more sensor inputs. For example, the sensors can include photodetection sensors and/or cameras (e.g., photodiodes, optical cameras, a laser scanner, etc.) to measure characteristics of an arc, such as brightness, presence of ultraviolet (UV) and/or infrared (IR) light, etc. In additional or alternative examples, pressure sensors, particulate sensors, flow rate sensors, and/or temperature sensors are employed to detect fume characteristics and/or other fume management conditions (e.g., such as flow rate, temperature, and/or particulate size), as a list of non-limiting examples.

As disclosed herein, a welding torch performs a welding operation (e.g., an arc welding operation) on one or more workpieces, thereby creating fumes, debris, etc. One or more sensors (e.g., an optical camera, a laser scanner, a magnetic sensor, a voltage sensor, a current sensor, a voltage or current output, etc.) are arranged to monitor arc characteristics during the welding process (e.g., intensity, wavelength, an output voltage or current, a voltage at the weld, etc.) monitor the environment to determine when fumes are being generated. When the measured characteristics indicate fumes are present, the fume extraction system can be configured to automatically activate to move one or more components of the fume extraction system to focus the fume inlet at the fume generation area.

In some examples, control circuitry (e.g., associated with the fume extraction system and/or the arc welding system) is operable to receive signals from the one or more sensors, welding system, and/or the fume extraction system corresponding to fumes or other airborne contaminants. The control circuitry can compare information from the sensors and/or systems to a list of fume characteristics (e.g., stored in a local or networked database). Based on the comparison, the control circuitry can determine if fumes are present, which component is best suited to extract those fumes, which component is best situated to be moved to the fume generating area, and activate and/or move the fume extraction components to remove fumes from the work area.

In some examples, the control circuitry can automatically control one or more components of the fume mitigation system (e.g., mechanical arm joints, valves, etc.) to activate and/or move to focus on an area generating fumes. Advantageously, automatically moving fume extraction system components to the location of fume generation efficiently and effectively remove fumes and/or debris from the work environment, while freeing the operator from returning to the fume controls before each welding operation. Beneficially, the fume extraction system can be configured to only be active at the work area during generation of fumes/debris, thus the motor is not running unnecessarily. This lowers the amount of noise from the fume extraction system, and prolongs the working life of the filters, the motor, and other associated components.

In disclosed examples, multiple sensors are configured to track/sense conditions that require fume mitigation. In response, one or more actuation systems are activated (e.g., via control circuitry) to move one or more system components (e.g., vent hood, articulating arm, movable inlet, etc.) closer to the fume source and/or the welding source.

Advantageously, the disclosed fume extraction system may default to a disabled mode (e.g., turned off, with the motor at a low speed, with the airflow suction level low), and be automatically activated in response to sensor and/or electronic feedback (e.g., from a photodetector, power source, etc.) that corresponds to fume generation. This system allows the operator to focus on creating the weld, while ensuring the fume extraction system is active only when needed.

In some examples, the collection of sensors can provide data to one or more machine learning algorithms to enhance responsiveness, and/or could be trained to recognize an operator, environment, and fume source to provide the necessary data to the above-mentioned suction source adaptations. In disclosed examples, the location of suction provided from the vent hood of the fume extraction system is controlled based on one or more fume/debris characteristics (e.g., from a corresponding sensor) exceeding a threshold level. The thresholds can be programmed (e.g., by an operator, instructor, supervisor, etc.), and/or provided via the machine learning algorithm (e.g., based on historical data, sensor feedback, filter longevity, etc.). Such control can be implemented remotely and in real-time (e.g., responsive to changing fume conditions) during a welding operation.

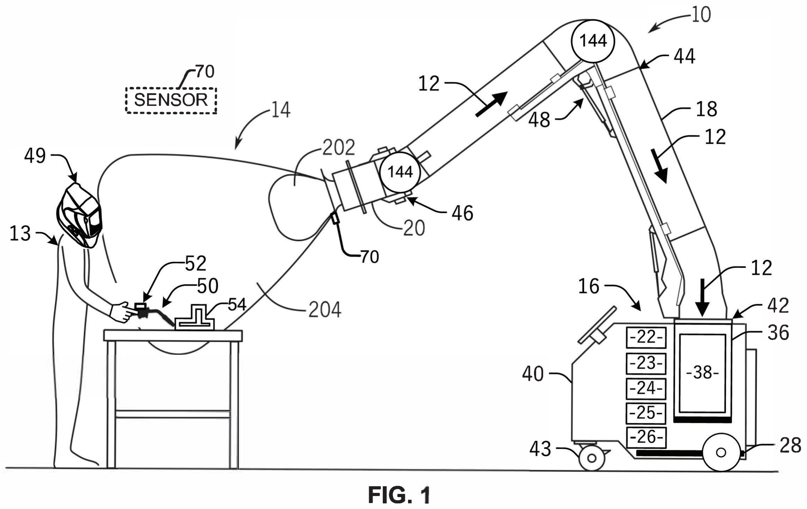

In some examples, a tracking system is employed to provide information on spatial tracking of one or more components of the system. For instance, tracking device 52 (e.g., a transmitter, printed code, visual identifier, signal generator, zero-key node, etc., shown in FIG. 1) could be arranged to one or more components at the point of fume generation. For example, the tracking device can be attached to the welding torch, workpiece, protective equipment (such as gloves), etc., and provide an indication as to where the fume generating devices and/or products are located within the working environment. The information can be transmitted (e.g., via wired and/or wireless technologies) thereby providing location data to the fume extractor. Once received, control circuitry can command the one or more actuation systems to move one or more components closer to the fume source and/or the welding source.

In some disclosed examples, the fume extraction system is controlled to regulate suction airflow based on one or more arc characteristics (e.g., intensity of the arc, heat, duration) being within a predetermined range and/or exceeding a predetermined threshold level.

The disclosed systems stand in contrast to conventional fume capture systems, which require the operator to activate and/or adjust the suction from the fume extraction system by manually operating a valve or some other type of vent. Advantageously, the disclosed fume extraction systems and associated control results in a reduction in filter run-time, while improving ease of use by automatically determining when to activated, deactivate, and/or adjust, including a desired amount of adjustment, as well as controlling the activation, deactivation, and/or adjustment. Also beneficially, the sensors could be configured to operate in the visible spectrum (e.g., for arc welding), and the infrared spectrum (e.g., for laser welding or cleaning).

In an example, the amount of suction is remotely adjusted during welding by controlling a speed of a variable-frequency drive (VFD) motor that provides negative airflow into the fume extraction system from the fume nozzle. In some examples, valving or other suitable devices can be controlled to adjust the suction flow for a given welding torch. Multiple welding sites occupied by multiple welders can be connected to a single fume extraction unit (e.g., each connected via a dedicated conduit(s)). The valves/adjustment devices can be controlled individually to control the suction flow at the point of welding, independent of any other welding torch/welding site.

To implement the fume regulation scheme disclosed herein, the control circuitry can be incorporated within the fume extraction system, on the welding torch itself, an associated robot welding system, and/or with another related machine (e.g., a wire feeder, welding power source, remote control). Location, orientation, position, and/or size of fume extraction inlets may be controlled by a computing platform or the control circuitry, such as in response to a monitored fume characteristic (e.g., via the one or more sensors) and/or based on one or more parameters of an associated welding system that correspond to arc welding (e.g., power output characteristics, wire feed speed, shielding gas flow, etc.). Sensor data of the monitored fume characteristic may be used to determine the presence of fumes or debris, and control the system to activate, deactivate, and/or move automatically. In some examples, an alert can be provided to an operator corresponding to the changing conditions, and allow the operator to control the system. Accordingly, control of the fume extraction system can be automatic (e.g., in response to one or more sensors inputs, in determination of arc welding) and/or in response to a user input (e.g., an input via a trigger, knob, pedal, touchscreen, etc.).

Advantageously, the disclosed fume extraction systems can be incorporated with automated welding systems (e.g., robotic welders), and/or with manual welding torch applications as well. The disclosed fume extraction systems can be integrated with existing welding systems and/or connected thereto as a retrofit system.

When introducing elements of various embodiments described below, the articles "a," "an," and "the" are intended to mean that there are one or more of the elements. The terms "comprising," "including," and "having" are intended to be inclusive and mean that there may be additional elements other than the listed elements. Moreover, while the term "exemplary" may be used herein in connection to certain examples of aspects or embodiments of the presently disclosed subject matter, it will be appreciated that these examples are illustrative in nature and that the term "exemplary" is not used herein to denote any preference or requirement with respect to a disclosed aspect or embodiment. Additionally, it should be understood that references to "one embodiment," "an embodiment," "some embodiments," and the like are not intended to be interpreted as excluding the existence of additional embodiments that also incorporate the disclosed features.

As used herein, the terms "coupled," "coupled to," and "coupled with," each mean a structural and/or electrical connection, whether attached, affixed, connected, joined, fastened, linked, and/or otherwise secured. As used herein, the term "attach" means to affix, couple, connect, join, fasten, link, and/or otherwise secure. As used herein, the term "connect" means to attach, affix, couple, join, fasten, link, and/or otherwise secure.

As used herein, the terms "first" and "second" may be used to enumerate different components or elements of the same type, and do not necessarily imply any particular order.

As used herein the terms "circuits" and "circuitry" refer to any analog and/or digital components, power and/or control elements, such as a microprocessor, digital signal processor (DSP), software, and the like, discrete and/or integrated components, or portions and/or combinations thereof, including physical electronic components (i.e., hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, circuitry is "operable" and/or "configured" to perform a function whenever the circuitry comprises the necessary hardware and/or code (if any is necessary) to perform the function, regardless of whether performance of the function is disabled or enabled (e.g., by a user-configurable setting, factory trim, etc.).

The terms "control circuit," "control circuitry," and/or "controller," as used herein, may include digital and/or analog circuitry, discrete and/or integrated circuitry, microprocessors, digital signal processors (DSPs), and/or other logic circuitry, and/or associated software, hardware, and/or firmware. Control circuits or control circuitry may be located on one or more circuit boards that form part or all of a controller.

In disclosed examples, a fume extractor includes two or more fume extraction components configured to intake fumes from a fume source; two or more distant arms configured to support positioning of the one or more fume extraction components; a proximate arm configured to support positioning of the one or more distant arms and the one or more fume extraction components; one or more multi-axis joints connected between the two or more distant arms and the proximate arm and configured to rotate the two or more distant arms or the proximate arm about an X-axis, Y-axis, and Z-axis; and control circuitry configured to adjust the proximate arm, the one or more multi-axis joints, and the two or more distant arms in order to position the one or more fume extraction components relative to the fume source.

In some examples, a first multi-axis joint of the one or more multi-axis joints is configured to rotate the proximate arm about the X-axis, Y-axis, and Z-axis.

In examples, second multi-axis joint of the one or more multi-axis joints comprises a multi-axis valve to connect the proximate arm to the one or more distant arms and configured to rotate the one or more distant arms about the X-axis, Y-axis, and Z-axis.

In examples, third multi-axis joint of the one or more multi-axis joints is configured to rotate the one or more fume extraction components about the X-axis, Y-axis, and Z-axis.

In some examples, the fume extractor further includes one or more sensors configured to provide one or more signals to the control circuitry in order to adjust the proximate arm, the one or more multi-axis joints, the multi-axis valve, the one or more distant arms, or the fume extraction components.

In examples, the control circuitry positions a first distant arm of the one or more distant arms and positions the first distant arm relative to the fume source to capture the fumes from the fume source.

In examples, the control circuitry positions a second distant arm of the one or more distant arms away from the fume source so that the first distant arm captures the fumes from the fume source.

In examples, the control circuitry activates a first distant arm of the one or more distant arms to capture the fumes from the fume source.

In examples, the control circuitry deactivates a second distant arm of the one or more distant arms to capture the fumes from the fume source.

In some disclosed examples, a fume extraction system includes a fume extraction machine comprising a drive motor to create suction for intaking fumes from a fume source; one or more fume extraction components configured to intake the fumes from the fume source; two or more distant arms configured to support positioning the one or more fume extraction components; one or more proximate arms connected between the fume extraction machine and the two or more distant arms and configured to support positioning of the distant arms and the one or more fume extraction components; one or more multi-axis joints connected to the two or more distant arms or the one or more proximate arms and configured to rotate the two or more distant arms or the one or more proximate arms about an X-axis, Y-axis, and Z-axis; and control circuitry configured to adjust the one or more proximate arms, the one or more multi-axis joints, and the one or more proximate arms in order to position the one or more fume extraction components relative to the fume source.

In some examples, the one or more proximate arms or the one or more distant arms are configured to move about three planes.

In some examples, a first multi-axis joint of the one or more multi-axis joints is configured to rotate the one or more proximate arms about the X-axis, Y-axis, and Z-axis.

In examples, a second multi-axis joint of the one or more multi-axis joints is configured to rotate the one or more distant arms about the X-axis, Y-axis, and Z-axis.

In examples, a third multi-axis joint of the one or more multi-axis joints is configured to rotate the one or more fume extraction components about the X-axis, Y-axis, and Z-axis.

In some examples, the fume extractor further includes one or more sensors mounted on the one or more fume extraction components and configured to provide one or more signals to the control circuitry in order to adjust the one or more proximate arms, the one or more multi-axis joints, the one or more distant arms, or the fume extraction components.

In some examples, the fume extractor further includes one or more sensors configured to measure one or more characteristics from the fume source and transmit fume source information to the control circuitry.

In examples, the one or more sensors are an accelerometer, a motion sensor, an inertial measurement unit, an optical sensor, or a proximity sensor.

In examples, the one or more fume extraction components include a moveable suction inlet configured to move relative to the fume source.

In some disclosed examples, a fume extraction machine includes a fume extractor component; a suction inlet arranged within the fume extractor component and configured to intake exhaust fumes; one or more sensors near the suction inlet configured to track a fume source; and a controller configured to control a position or orientation of the suction inlet based on feedback from the one or more sensors, wherein the suction inlet moves about one or more planes based on the feedback from the one or more sensors.

In some examples, the fume extraction machine further includes an actuator or motor to move the suction inlet in response to commands from the controller.

In examples, the fume extractor component is a fume extraction nozzle.

In examples, the fume extractor component is a low profile hood.

In some examples, the one or more sensors are arranged in a fixed position on the fume extractor component.

In some examples, the one or more sensors are configured to follow the movement of the suction inlet.

In some examples, the fume extraction machine further includes a movable arm to support the fume extractor component, wherein the controller is further configured to; control movement of the suction inlet when the feedback is below a threshold amount; and move the movable arm when the feedback is greater than the threshold amount.

Turning now to the drawings, FIG. 1 illustrates an extraction system 10 for extracting airborne components, such as smoke, fumes, particulate matter, and more generally, workspace air as indicated by reference numeral 12 from a work area 14. As shown, a welder 13 wearing a helmet 49 may operate a welding tool 50 (e.g., an arc welding torch, a laser welding tool, a plasma cutter, etc.) to weld one or more workpieces. In the illustrated embodiment the extraction system 10 comprises a base unit 16 coupled to conduits 18 that channel air to and from a hood 20. The hood 20 is designed to be placed at or near the work area 14 and, when the base unit 16 is activated, serves to create a region of air around the area and to extract the workspace air, directing extracted air 12 to the base unit 16 for processing.

Due to the intense brightness from welding operations, a shade or filter is typically used to shield the operator's eyes during welding, often built directly into the helmet 49. Some conventional auto-darkening lenses employ photodetectors to automatically sense the presence and/or intensity of an arc, for example, and adjust the amount of shading accordingly.

One or more sensors 70 (e.g., photodetector sensors, flow sensors, plasma sensors, heat sensors, etc.) can be arranged in the welding environment and used to detect the presence of a fume, in a manner similar to those disclosed herein. Thus, the sensors 70 can be used to signal to the fume extraction system 10 (e.g., via the control circuitry 26) to activate one or more components of the system. This can include adjustment of one or more mechanical joints 144 to move conduits 118 and/or the vent hood 20 to focus fume extraction at different locations within the work area.

In some additional or alternative examples, the control circuitry 26 is configured to control the motor 22 to activate, deactivate, and/or adjust an amount of suction airflow (e.g., by controlling the motor speed). Such sensors may be connected to the control circuitry 26 via wired and/or wireless connections, and may be arranged on the fume extraction system 10 (e.g., on the conduits 18, hood 20, etc.), on the torch 50, on the welding helmet 49, and/or the welding environment. In some examples, a user interface is also included to allow an operator to make manual adjustments, and/or to connect with a remote system configured to provide operational information to the control circuitry 26.

It should be noted that while in certain embodiments a stand-alone base unit 16 or cart-type unit is described, the present disclosure is not limited to any particular physical configuration. More generally, systems and arrangements provided herein may be implemented as fixed or semi-fixed installations, such as those used in industrial, commercial, hobby, and other settings. That is, certain of the components of the base unit described herein may serve multiple workspaces, work cells, weld cells, work locations and areas, and so forth, by common conduits that direct positive-pressure air to and channel air and airborne components from one or more workspaces. Operator controls may be positioned at the work area and/or remotely from such workspaces to control operation of the system 10.

Depending on the application, airborne components evacuated from the work area 14 may be in an aerosol form, such as solid, liquid or gaseous phase particles that are suspended in air. Such airborne components may form smoke, fumes (including chemical fumes), or clouds of components generated by an operation performed in the area. In some applications, the airborne components may be at least temporarily airborne but not suspended in the air, such as in the case of larger particulates, such as droplets, mist (e.g., from oils, coolants, and so forth), dust (e.g., from drywall, grain, minerals, cements, or other dust sources), chips, debris, and so forth. The system 10 is configured to collect and extract any such airborne components. Similarly, reference is made in this disclosure to "air" or "airborne," although the fluid in which the airborne components are found and that is circulated by the system may be, more generally, a gaseous substance that need not contain the same constituents, or in the same ratios as found in atmospheric air. Such gasses are intended nevertheless be included in the term "air" or "airborne." Moreover, it is presently contemplated that the same principles of fluid dynamics and borne component removal may be applied to other "fluids" than air or gasses (including liquids), and to that extent the teachings of the present disclosure are intended to extend to those applications.

In some examples, the base unit 16 includes a blower 22 driven by a drive motor 24. The drive motor 24 (as well as other functions of the extraction system 10) is controlled by control circuitry 26 which may provide drive signals to the motor for fixed-speed or variable-speed operation. The cart may best be designed with a small and highly efficient drive motor on the blower. In some examples, more than one motor and/or blower, fan or compressor may be used. The base unit 16 may be designed to draw power from any source, such as the power grid, battery sources, engine-generator sets, and so forth. The control circuitry 26 typically includes processing circuitry and memory for carrying out drive operations as desired by the operator or in response to system inputs as described below. Accordingly, the control circuitry 26 may communicate with an operator interface 23 for receiving operator settings, speed settings, on-off commands, and so forth. Similarly, the control circuitry 26 may include and/or communicate with an interface 25 (e.g., a remote interface) designed to receive signals from remote inputs, remote systems, sensors 70, and so forth. The control circuitry 26, via the remote interface 25, may also provide data to such remote systems such as for monitoring and/or controlling operation of the extraction system 10.

As shown in FIG. 1, the conduits 18 extend between the base unit 16 and the hood 20, which may include a positive pressure air conduit and/or a return air conduit. In some examples, the positive pressure air conduit provides air to the hood, while the return air conduit is under a negative or slight suction pressure to draw air containing the airborne components from the work area 14. The extracted air 12 returning from the hood 20 in conduit 18 may be directed through a filter 38. In some examples, the air 12 may be re-introduced into the blower 22 as a semi-controlled system. As described herein, the system may also include components designed to allow for adjustment of the individual or relative flow rates of one or both of the positive and negative pressure air streams.

In some examples, adjustment of the positive pressure air flow and/or the return air flow may be optimized for specific operations of the system. Several different techniques are presently contemplated for such adjustment and may include, for example, a bypass valve, a louver, or other mechanical device which may be adjusted to limit the flow of air from the suction filter and, consequently, the intake of air into the blower 22 from the ambient surroundings. Such adjustment may advantageously allow for relative mass or volumetric flow rates of the positive pressure and return airstreams to enhance creation of the air region and extraction of workspace air 204. For example, user inputs may be provided via the operator interface 23 to control one or both adjustments, communicated to the control circuitry 26 to regulate their operation (e.g., via small adjustment motors and/or actuator assemblies). In some examples, adjustments to flow rates for the negative pressure airstreams (and/or positive pressure airstreams) may be made by altering the speed of one or more motors and/or blowers, fans or compressors. Moreover, other and additional components and functionalities may be built into the system.

As shown in the illustration of FIG. 1, adjustments to the extraction system 10 may alter an amount of workspace air drawn into the extraction system 10. For example, a smaller region 202 represents an approximate limit for the effective capture and extraction of airborne components at a first extraction setting, while a larger region 204 represents a much greater effective capture and extraction region at a second extraction setting. While the effectiveness of the extraction will depend upon factors such as particle size, temperature, flow rate, etc., the graphic illustration of FIG. 1 provides a demonstration of adjustable extraction capabilities.

In the illustration of FIG. 1, the example system 10 is housed in a cart 40 designed to be rolled on wheels or casters 43 to the vicinity of a metal working operation. The system 10 can be designed to be plugged into a conventional outlet, such as to draw power from the power grid. In some examples, the conduits 18 include flexible joints, allowing raising, lowering, lateral and other positioning of the hood 20 at or near, typically above, the work space 14. In some examples, an arrangement of conduits may make use of a manifold to aide in distributing positive pressure air flow to the annular space between the inner and outer shrouds of the hood.

As mentioned above, the present techniques may be employed in systems and arrangements other than carts or systems and base units that are local to a work location. In some examples, fixed or semi-fixed extraction systems may be employed in workshops, factories, assembly and metalworking plants, and so forth.

The conduits 18 convey both a positive pressure or outgoing flow and a return flow that may contain airborne components to be extracted from the work area. In this example, the conduits 18 are adapted for rotation at one or more interfaces. The conduits 18 may rotate more or less than 360 degrees at each interface, although full multi-rotation capabilities may be designed into one or more joints between the conduits 18, the hood 20, and/or the base unit 16. In the embodiment of FIG. 1, the conduit 18 has a lower joint 42 where it joins the base unit, a middle joint 44 that joins two generally linear sections of conduit and a hood joint 46 about which the hood 20 may be pivoted at least within a limited angular range. Each of the lower joint 42, the middle joint 44, and/or the hood joint 46 can include a mechanicaljoint 144 configured to automatically move, position, and/or orient the conduits 18 and/or the hood 20.

In some examples, one or more support structures 48 are provided adjacent to the lower joint 42 or joint 44 to aid in supporting the arm as it is extended toward and/or retracted from a work area. In the example system 10 of FIG. 1, the joints may include smooth inner walls that can be deformed so as to permit extension, retraction and, more generally, positioning of the conduits 18 with respect to the base unit 16, while adding little or no head loss as compared to a linear section of conduit.

As shown in FIG. 1, the base unit 16 has a filter or filter element 38 disposed in a filter box 36. The filter box 36 defines a region around or adjacent to the filter 38 from which air is drawn during operation of the system 10. That is, as disclosed herein, the returning or negative airstream enters the base unit 16, and this airstream, bearing the airborne components (e.g., debris, particles, etc.) enters into the region and then through an outer periphery of the filter 38. In some examples, the filter 38 is cylinder-like, but any suitable configuration may be used. In some examples, the filter 38 is hollow, and is closed by a cap. Because debris may be released from the filter element during cleaning, a collection tray 28 is placed near a bottom region of the base unit 16 to allow the debris to be collected and/or separated from the filter 38.

Within the cart, return flow air 12 enters the filter box 36 containing the filter 38, where the air 12 is filtered to remove particulate matter and other components borne by the airstream. The assembly may be designed for pressure cleaning, in a process that may direct pressurized air against one or more filter elements to promote the release of the captured particulate. From the filter box 36, air is drawn into the blower 22 which is driven by motor 24 as described above. In some examples, multiple motors and/or blowers may be employed. For example, one motor and blower set may be used for the outgoing or positive air stream, while another motor and blower set may be used for the return or negative air stream. One or both air streams may be filtered by a common filter or dedicated filters.

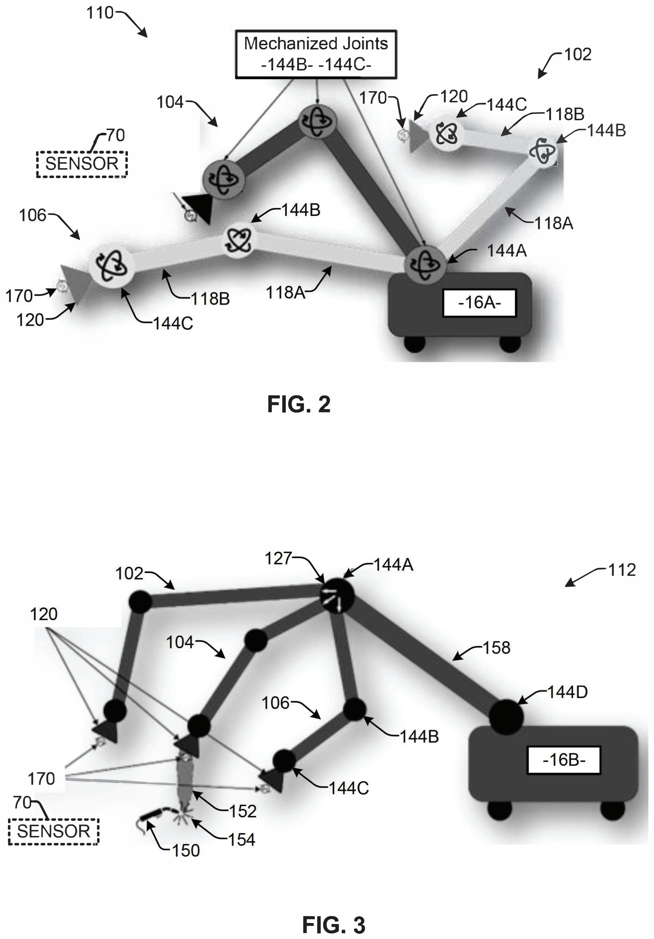

FIG. 2 provides an example illustration of a fume extraction system having multiple fume extraction extension components 102, 104, and 106. Although three such fume extraction extensions are illustrated, fewer than three and/or more than three such extensions are contemplated. As shown, each fume extraction extension includes a first conduit 118A and a second conduit 118B, connected by a mechanized joint 144B. Another mechanized joint 144C connects the second conduit 118B to a fume vent hood 120. One or more sensors 170 may be arranged on, at, and/or near each vent hood 120. In the example of FIG. 2, each first conduit 118A of each fume extraction extension 102, 104, and 106 connects to a base unit 116A via a mechanized joint 144A.

For example, each fume extraction extension operates as a mechanized arm, such that the mechanized joints are configured to move in multiple directions and/or orientations (e.g., roll, yaw, and pitch) about a geometric center of each joint. The one or more sensors 170 provide feedback corresponding to one or more fume characteristics to the base unit 116A (similar to base unit 16, and comprising control circuitry 26). The control circuitry provides instructions to the mechanized joints to automatically adjust, thus moving the corresponding fume extraction extension and/or hood to focus on the fume source. This adjustment would maintain the suction source directed at the fume source.

In some examples, each mechanized joint includes one or more activators, such as a solenoid and/or motor, which receives power and/or instructions from the base unit 116A. In some examples, a central power source (e.g., hydraulic power) is located within the base unit 116A, and transmits power to the mechanized joints in accordance with instructions from the control circuitry.

Turning to FIG. 3, fume extraction system 112 has an arrangement of fume extraction extensions 102, 104, 106 similar to FIG. 2, collecting/monitoring fumes/debris 152 and/or a welding arc 154 from using a welding torch 150. However, an additional conduit 158 connects the portion of the system comprising the mechanized joint 144A to a mechanized joint 144D mounted to the base unit 16B (containing components similar to base units 16, 16A). In some examples, a flow adjustment device, louvre and/or valve 127 can be arranged with the mechanized joint (e.g., mechanized joint 144A) and/or within one or more of the first and/or second conduits to manually and/or automatically (e.g., in response to sensor data) adjust flow volume through a given fume extraction extension.

In some examples employing multiple such fume extraction extensions, fume extraction extension 102 may require a stronger airflow suction (e.g., during a cleaning operation), thus causing the motor 24 to increase speed and therefore suction power. If this increase causes airflow at fume extraction extension 104 to exceed a desired amount of suction (e.g., such that shielding gas is too quickly being evacuated from a welding operation), the valve may adjust to ensure a greater share of the suction airflow is coming from the fume extraction extension 102 and restricted at fume extraction extension 104.

Each mechanized join 144-144D can include a flow adjustment device 127 and operate as disclosed herein. Further, the flow adjustment devices may be equipped with a local control circuit, which may be configured to receive sensor data (e.g., from a sensor within the same fume extraction extension). In this manner, the sensor data can inform whether an adjustment of airflow is needed, and activate the valve via a local actuator (e.g., at the mechanized joint).

Thus, the mechanized joints of each extraction extension component are arranged on the fume extraction extensions and/or configured to allow airflow through each of the connected conduits and/or hoods. The mechanized joint, and the actuators that control movement within the joint, may be arranged externally or internally, or partially externally and partially internally. The mechanized joints may control placement of the support structures 48 in some examples. The mechanized joints may also cause one or more of the lower joint 42, the middle joint 44, and/or the hood joint 46 to move or rotate.

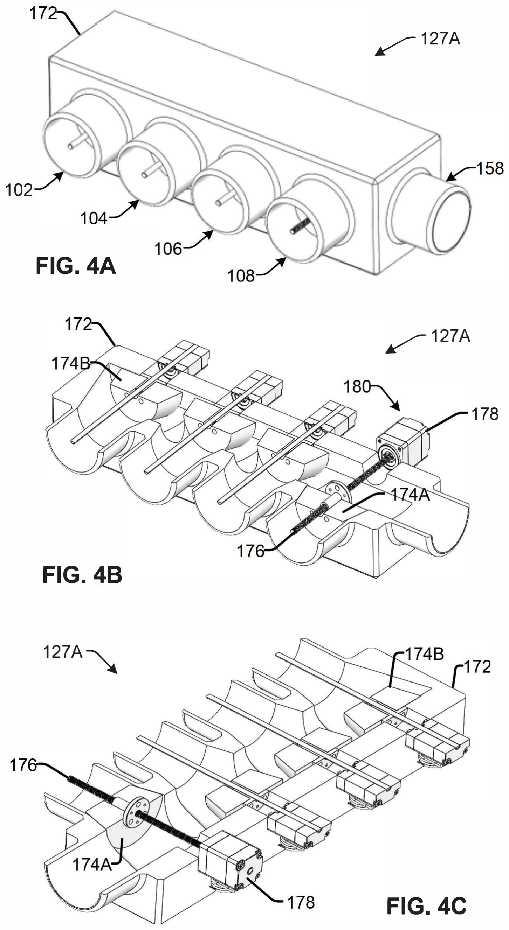

FIGS. 4A to 4C illustrate an example valve 127A for use in a fume extractor system as disclosed herein. As shown, the valve 127A can have a housing 172 configured to receive conduit 158. Arranged on another surface of the housing are outlets for fume extraction extensions 102, 104, 106, and 108. Arranged within the housing 172 are pistons 180, configured to block the outlet for the fume extraction extensions. For example, each piston can include a plunger or stop 174 which is supported on a rod 176. An actuator or solenoid 178 provides power to move the corresponding plunger 174 between an open position (represented by plunger 174B) and a closed position (represented by plunger 174A). The actuator 178 can receive instructions from a controller (e.g., controller 22), and can selectively close or open one, two, three, or all four outlets.

Although illustrated as having four outlets, in some examples fewer than four outlets/pistons, while in other examples five or more outlets may be used. Similarly, a single inlet is illustrated, but two or more inlets can connect to the housing. Moreover, the illustrated examples shows all outlets are arranged on a common surface, while in other examples one or more outlets can be arranged to open on an alternative surface. The illustrated housing has a generally rectangular shape, but any desired shape, dimensions, and/or outlet (and inlet) arrangement is considered within the concepts disclosed herein.

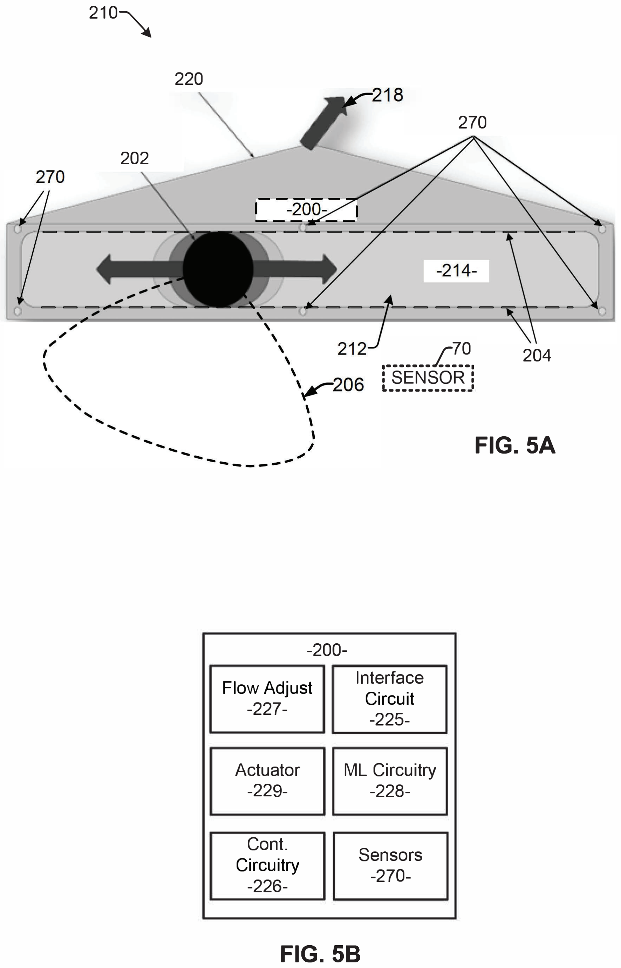

Turning to FIG. 5A, an inlet adjustment system 210 can be arranged on the end of a conduit 218 (similar to conduit 18, etc.) to replace vent hoods 20, 120, and/or can be arranged along a work station (e.g., integrated with an enclosure, workbench, etc.). In some examples, the system 210 can be arranged on an end of a fume extraction extension, as disclosed herein.

As illustrated, vent hood 220 can include an array of sensors 270 arranged about an opening 212. Within the opening is an inlet 202, which is configured to traverse a length of the opening. For example, one or more frames and/or rails 204 can support the inlet 202, allowing the inlet to move relative to the hood 220. A wall, material, and/or surface 214 can be arranged on either side of the inlet 202, configured to extend from an edge of the hood 220 and/or opening 212 and the movable inlet, as the inlet moves side to side. Thus, the surface 214 can be flexible, telescoping, and/or semi-porous (e.g., a mesh, a filter, etc.), allowing the inlet 202 to receive fumes/debris around and/or through the surface.

In some examples, the system 210 can include a local control system 200, configured to receive data from the sensors 270, determine a location of the fume, and control a local actuator to move the inlet 202, thereby changing the location of the suction airflow 206. For example, as shown in FIG. 5B the control system 200 may include circuitry 226, an interface circuit 225, a flow adjustment device 227 (e.g., a valve, controllable diaphragm, etc.), and actuator 229 (e.g., motor) to move the position of the inlet 202, as well as sensors 270. Thus, the control system 200 can react to changing conditions at the worksite without communicating with the control circuitry 26, 126.

In some example, a machine learning circuit 228 is included (at the control system 200 and/or the control circuitry 26, 126), and learns how best to arrange the inlet 202 and/or control the flow adjustment device 227 to optimize fume extraction. In some examples, the machine learning circuit 228 further determines control instructions for movement of the mechanized joints, as disclosed herein. In some examples, the inlet 202 is configured to receive instructions from control circuitry 26, 126, and make adjustments accordingly.

The system 210 could also be implemented in a two-dimensional plane, enabling the sliding suction inlet 202 to slide side to side, as well as up and down, covering a larger area. For example, two frames and/or sets of rails that cross perpendicularly may be employed, making changes in the location of the inlet 202 flexible.

Advantageously, the operator significantly reduces the amount of time needed to adjust position, orientation, and/or suction capacity of the fume extractor, increasing productivity and efficiency.

As utilized herein, "and/or" means any one or more of the items in the list joined by "and/or." As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}. In other words, "x, y and/or z" means "one or more of x, y and z." As utilized herein, the term "exemplary" means serving as a non-limiting example, instance, or illustration. As utilized herein, the terms "e.g.," and "for example" set off lists of one or more non-limiting examples, instances, or illustrations.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. For example, blocks and/or components of disclosed examples may be combined, divided, re-arranged, and/or otherwise modified. Therefore, it is intended that the present method and/or system is not limited to the particular implementations disclosed, but that the present method and/or system will include all implementations falling within the scope of the appended claims, both literally and under the doctrine of equivalents.

Certain embodiments of the invention are described in the following clauses:
Clause 1. A fume extractor comprising:
   two or more fume extraction components configured to intake fumes from a fume source;
   two or more distant arms configured to support positioning of the one or more fume extraction components;
   a proximate arm configured to support positioning of the one or more distant arms and the one or more fume extraction components;
   one or more multi-axis joints connected between the two or more distant arms and the proximate arm and configured to rotate the two or more distant arms or the proximate arm about an X-axis, Y-axis, and Z-axis; and
   control circuitry configured to adjust the proximate arm, the one or more multi-axis joints, and the two or more distant arms in order to position the one or more fume extraction components relative to the fume source.
Clause 2. The fume extractor of clause 1, wherein a first multi-axis joint of the one or more multi-axis joints is configured to rotate the proximate arm about the X-axis, Y-axis, and Z-axis.
Clause 3. The fume extractor of clause 2, wherein a second multi-axis joint of the one or more multi-axis joints comprises a multi-axis valve to connect the proximate arm to the one or more distant arms and configured to rotate the one or more distant arms about the X-axis, Y-axis, and Z-axis.
Clause 4. The fume extractor of clause 3, wherein a third multi-axis joint of the one or more multi-axis joints is configured to rotate the one or more fume extraction components about the X-axis, Y-axis, and Z-axis.
Clause 5. The fume extractor of clause 3, further comprising one or more sensors configured to provide one or more signals to the control circuitry in order to adjust the proximate arm, the one or more multi-axis joints, the multi-axis valve, the one or more distant arms, or the fume extraction components.
Clause 6. The fume extractor of clause 3, wherein the control circuitry positions a first distant arm of the one or more distant arms and positions the first distant arm relative to the fume source to capture the fumes from the fume source.
Clause 7. The fume extractor of clause 6, wherein the control circuitry positions a second distant arm of the one or more distant arms away from the fume source so that the first distant arm captures the fumes from the fume source.
Clause 8. The fume extractor of clause 1, wherein the control circuitry activates a first distant arm of the one or more distant arms to capture the fumes from the fume source.
Clause 9. The fume extractor of clause 8, wherein the control circuitry deactivates a second distant arm of the one or more distant arms to capture the fumes from the fume source.
Clause 10. A fume extraction system comprising:
   a fume extraction machine comprising a drive motor to create suction for intaking fumes from a fume source;
   one or more fume extraction components configured to intake the fumes from the fume source;
   two or more distant arms configured to support positioning the one or more fume extraction components;
   one or more proximate arms connected between the fume extraction machine and the two or more distant arms and configured to support positioning of the distant arms and the one or more fume extraction components;
   one or more multi-axis joints connected to the two or more distant arms or the one or more proximate arms and configured to rotate the two or more distant arms or the one or more proximate arms about an X-axis, Y-axis, and Z-axis; and
   control circuitry configured to adjust the one or more proximate arms, the one or more multi-axis joints, and the one or more proximate arms in order to position the one or more fume extraction components relative to the fume source.
Clause 11. The fume extraction system of clause 10, wherein the one or more proximate arms or the one or more distant arms are configured to move about three planes.
Clause 12. The fume extraction system of clause 10, wherein a first multi-axis joint of the one or more multi-axis joints is configured to rotate the one or more proximate arms about the X-axis, Y-axis, and Z-axis.
Clause 13. The fume extraction system of clause 12, wherein a second multi-axis joint of the one or more multi-axis joints is configured to rotate the one or more distant arms about the X-axis, Y-axis, and Z-axis.
Clause 14. The fume extraction system of clause 13, wherein a third multi-axis joint of the one or more multi-axis joints is configured to rotate the one or more fume extraction components about the X-axis, Y-axis, and Z-axis.
Clause 15. The fume extraction system of clause 10, further comprising one or more sensors mounted on the one or more fume extraction components and configured to provide one or more signals to the control circuitry in order to adjust the one or more proximate arms, the one or more multi-axis joints, the one or more distant arms, or the fume extraction components.
Clause 16. The fume extraction system of clause 10, further comprising one or more sensors configured to measure one or more characteristics from the fume source and transmit fume source information to the control circuitry.
Clause 17. The fume extraction system of clause 16, wherein the one or more sensors are an accelerometer, a motion sensor, an inertial measurement unit, an optical sensor, or a proximity sensor.
Clause 18. The fume extraction system of clause 10, wherein the one or more fume extraction components include a moveable suction inlet configured to move relative to the fume source.
Clause 19. A fume extraction machine comprising:
   a fume extractor component;
   a suction inlet arranged within the fume extractor component and configured to intake exhaust fumes;
   one or more sensors near the suction inlet configured to track a fume source; and
   a controller configured to control a position or orientation of the suction inlet based on feedback from the one or more sensors,
   wherein the suction inlet moves about one or more planes based on the feedback from the one or more sensors.
Clause 20. The fume extraction machine of clause 19, further comprising an actuator or motor to move the suction inlet in response to commands from the controller.
Clause 21. The fume extraction machine of clause 19, wherein the fume extractor component is a fume extraction nozzle.
Clause 22. The fume extraction machine of clause 19, wherein the fume extractor component is a low profile hood.
Clause 23. The fume extraction machine of clause 19, wherein the one or more sensors are arranged in a fixed position on the fume extractor component.
Clause 24. The fume extraction machine of clause 19, wherein the one or more sensors are configured to follow the movement of the suction inlet.
Clause 25. The fume extraction machine of clause 19, further comprising a movable arm to support the fume extractor component, wherein the controller is further configured to;
   control movement of the suction inlet when the feedback is below a threshold amount; and
   move the movable arm when the feedback is greater than the threshold amount.

## Claims

1. A fume extractor comprising:
two or more fume extraction components configured to intake fumes from a fume source;
two or more distant arms configured to support positioning of the one or more fume extraction components;
a proximate arm configured to support positioning of the one or more distant arms and the one or more fume extraction components;
one or more multi-axis joints connected between the two or more distant arms and the proximate arm and configured to rotate the two or more distant arms or the proximate arm about an X-axis, Y-axis, and Z-axis; and
control circuitry configured to adjust the proximate arm, the one or more multi-axis joints, and the two or more distant arms in order to position the one or more fume extraction components relative to the fume source.

2. The fume extractor of claim 1, wherein a first multi-axis joint of the one or more multi-axis joints is configured to rotate the proximate arm about the X-axis, Y-axis, and Z-axis.

3. The fume extractor of claim 2, wherein a second multi-axis joint of the one or more multi-axis joints comprises a multi-axis valve to connect the proximate arm to the one or more distant arms and configured to rotate the one or more distant arms about the X-axis, Y-axis, and Z-axis.

4. The fume extractor of claim 3, wherein a third multi-axis joint of the one or more multi-axis joints is configured to rotate the one or more fume extraction components about the X-axis, Y-axis, and Z-axis.

5. The fume extractor of claim 3, further comprising one or more sensors configured to provide one or more signals to the control circuitry in order to adjust the proximate arm, the one or more multi-axis joints, the multi-axis valve, the one or more distant arms, or the fume extraction components.

6. The fume extractor of claim 3, wherein the control circuitry positions a first distant arm of the one or more distant arms and positions the first distant arm relative to the fume source to capture the fumes from the fume source, and optionally,
wherein the control circuitry positions a second distant arm of the one or more distant arms away from the fume source so that the first distant arm captures the fumes from the fume source.

7. The fume extractor of claim 1, wherein the control circuitry activates a first distant arm of the one or more distant arms to capture the fumes from the fume source, and optionally,
wherein the control circuitry deactivates a second distant arm of the one or more distant arms to capture the fumes from the fume source.

8. A fume extraction system comprising:
a fume extraction machine comprising a drive motor to create suction for intaking fumes from a fume source;
one or more fume extraction components configured to intake the fumes from the fume source;
two or more distant arms configured to support positioning the one or more fume extraction components;
one or more proximate arms connected between the fume extraction machine and the two or more distant arms and configured to support positioning of the distant arms and the one or more fume extraction components;
one or more multi-axis joints connected to the two or more distant arms or the one or more proximate arms and configured to rotate the two or more distant arms or the one or more proximate arms about an X-axis, Y-axis, and Z-axis; and
control circuitry configured to adjust the one or more proximate arms, the one or more multi-axis joints, and the one or more proximate arms in order to position the one or more fume extraction components relative to the fume source.

9. The fume extraction system of claim 8, wherein the one or more proximate arms or the one or more distant arms are configured to move about three planes.

10. The fume extraction system of claim 8, wherein a first multi-axis joint of the one or more multi-axis joints is configured to rotate the one or more proximate arms about the X-axis, Y-axis, and Z-axis and optionally
wherein a second multi-axis joint of the one or more multi-axis joints is configured to rotate the one or more distant arms about the X-axis, Y-axis, and Z-axis and optionally,
wherein a third multi-axis joint of the one or more multi-axis joints is configured to rotate the one or more fume extraction components about the X-axis, Y-axis, and Z-axis.

11. The fume extraction system of claim 8, further comprising one or more sensors mounted on the one or more fume extraction components and configured to provide one or more signals to the control circuitry in order to adjust the one or more proximate arms, the one or more multi-axis joints, the one or more distant arms, or the fume extraction components.

12. The fume extraction system of claim 8, further comprising one or more sensors configured to measure one or more characteristics from the fume source and transmit fume source information to the control circuitry, and optionally,
wherein the one or more sensors are an accelerometer, a motion sensor, an inertial measurement unit, an optical sensor, or a proximity sensor.

13. The fume extraction system of claim 8, wherein the one or more fume extraction components include a moveable suction inlet configured to move relative to the fume source.

14. A fume extraction machine comprising:
a fume extractor component;
a suction inlet arranged within the fume extractor component and configured to intake exhaust fumes;
one or more sensors near the suction inlet configured to track a fume source; and
a controller configured to control a position or orientation of the suction inlet based on feedback from the one or more sensors,
wherein the suction inlet moves about one or more planes based on the feedback from the one or more sensors.

15. The fume extraction machine of claim 14, further comprising an actuator or motor to move the suction inlet in response to commands from the controller or
wherein the fume extractor component is a fume extraction nozzle or
wherein the fume extractor component is a low profile hood or
wherein the one or more sensors are arranged in a fixed position on the fume extractor component or
wherein the one or more sensors are configured to follow the movement of the suction inlet or
wherein the fume extraction machine, further comprises a movable arm to support the fume extractor component, and the controller is further configured to;
control movement of the suction inlet when the feedback is below a threshold amount; and
move the movable arm when the feedback is greater than the threshold amount.
